# EUROPÄISCHE PATENTANMELDUNG

(11) **EP 4 369 070 A2**
(43) Veröffentlichungstag der Anmeldung: **15.05.2024**
(21) Anmeldenummer: 24166395.4
(22) Anmeldetag: 29.05.2020
(51) Int. Cl.: G02B 6/44

(54) **KABELZUGABFANGVORRICHTUNG FÜR GLASFASERKABEL**

(62) Teilanmeldung aus: 20177477.5
(71) Anmelder: Hauff-Technik GRIDCOM GmbH, 73494 Rosenberg (DE)
(72) Erfinder: Hammer, Ralf, 73489 Jagstzell (DE)
(74) Vertreter: König Szynka Tilmann von Renesse Patentanwälte Partnerschaft mbB München

(57) **Zusammenfassung**

Die Erfindung betrifft eine Kabelzugabfangvorrichtung (10, 11) für Glasfaserkabel, insbesondere im Bereich eines Spleißmoduls (1). Dabei werden eine Aufnahme(10) und ein Steckelement (11) verwendet, wobei die Aufnahme (10) eine in einer Mehrzahl gleicher Aufnahmen (10) in benachbarter einstückiger Ausführung ist und das Steckelement (11) durch Einstecken in die Aufnahme (10) zu einem Verklemmen eines von der Glasfaser verschiedenen Kabelteils, insbesondere von Zugentlastungsfasern (19), führt.

## Beschreibung

Die vorliegende Erfindung bezieht sich auf eine Vorrichtung, mit der bei einem Glasfaserkabel, also einem zumindest eine Glasfaser enthaltenden Kabel, Zug auf diesem Kabel mechanisch abgefangen werden kann. Das betrifft insbesondere Zug in der Leitungsrichtung des Kabels.

Glasfaserkabel dienen zur Signalübertragung mit hohen Übertragungsraten und/oder hoher räumlicher Reichweite und finden immer stärkeren Einsatz. Insbesondere werden zunehmend die Glasfaserkabelnetze bis zum Verbraucher verlegt oder sogar bis zum Endgerät im Haushalt oder Büro. Mit dem Ausbau der Glasfaserkabelnetze stellt sich immer häufiger die Aufgabe der Verbindung von Glasfaserkabeln untereinander.

Dabei werden die einzelnen Fasern mit einer an sich bekannten Technologie aneinandergefügt und diese sogenannten Spleiß- und Patchstellen in ebenfalls an sich bekannter Weise geordnet sowie zugänglich und geschützt untergebracht. Man spricht von Spleißmodulen, in denen z. B. eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlusskabeln (Pigtails) auf Abschlusselemente (etwa Stecker und Kupplungen) geführt werden. Dort können dann zur Weiterführung der Glasfaserverbindungen Kabel mit Verbindungselementen (etwa Steckern), insbesondere Patchkabel, eingesetzt werden. Im Folgenden bezieht sich der Begriff des Glasfaserkabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Weiterhin sind Kabelzugabfangvorrichtungen an sich bekannt. Glasfasern sind mechanisch relativ empfindlich und müssen daher sorgfältig vor bestimmten mechanischen Beanspruchungen geschützt werden. Dies betrifft insbesondere Biegelasten, weswegen bestimmte Mindestbiegeradien für Glasfaserkabel verbindliche Vorgabe sind. Vorliegend geht es allerdings um Zuglasten, vor allem entlang der Leitungsrichtung, und eine Vorrichtung zum Abfangen derselben. Solche Kabelzugabfangvorrichtungen für Glasfaserkabel sind ebenfalls in verschiedenen Formen vorbekannt, vergleiche z. B. die EP 3 255 472 A1.

Dabei werden eine Mehrzahl Einzelteile der Vorrichtung zunächst auseinandergeklappt oder -genommen und das Glasfaserkabel in eines der Teile eingelegt. Im Regelfall wird dazu ein Mantel des Kabels abgetrennt, sodass das Kabel in den Vorrichtungsteil noch ummantelt einläuft, aber nicht herausläuft. Dann wird ein von der Glasfaser verschiedener Teil des Kabels, in aller Regel eigens zu diesem Zweck vorgesehene Zugentlastungsfasern aus z. B. Aramid, von der eigentlichen Glasfaser getrennt in dem Vorrichtungsteil angeordnet und durch Zusammenklappen oder anderweitiges Zusammensetzen der Vorrichtungsteile in der Kabelzugabfangvorrichtung geklemmt. Statt mit den Zugentlastungsfasern wäre das grundsätzlich z. B. auch mit dem Mantel möglich.

Wenn nun die Kabelzugabfangvorrichtung gehalten wird und eine Zuglast auf das Kabel gelangt, so übertragen die Zugentlastungsfasern oder eben auch ein anderer Kabelteil diesen Zug auf die Kabelzugabfangvorrichtung, sodass die Glasfaser selbst geschützt bleibt. Konkret wird dazu eine solche Kabelzugabfangvorrichtung beispielsweise in der Wand einer Spleißdose oder eines in einem Verteilerschrank montierten Spleißmoduls montiert, insbesondere in eine passende Aufnahme gesteckt, sodass die Glasfaser selbst, nun von Zug entlastet, z. B. zu einer Spleißstellenablage geführt werden kann. Ein etwaiger Kabelzug betrifft damit die Spleißstelle nicht.

Die grundsätzliche Funktionsweise vorbekannter Kabelzugabfangvorrichtungen gewährleistet mithin eine Klemmung oder anderweitige Fixierung (z. B. der Zugentlastungsfasern) des Kabels in der Kabelzugabfangvorrichtung und danach eine große Flexibilität hinsichtlich der Montage dieser Vorrichtung.

Zur Klarstellung ist anzumerken, dass die als solche bezeichnete "Glasfaser" nicht zwingend außer einer Glasfaser selbst keine weiteren Bestandteile aufweisen darf. Insbesondere kann es noch eine Umhüllung (gewissermaßen einen inneren Mantel des Kabels) geben. Das hat allerdings mit den Einzelheiten dieser Erfindung nichts weiter zu tun.

Der vorliegenden Erfindung liegt das Problem zugrunde, ausgehend von diesem Stand der Technik eine verbesserte Kabelzugabfangvorrichtung vorzuschlagen.

Hierzu richtet sich die Erfindung auf eine Kabelzugabfangvorrichtung nach Anspruch 1 und, in bevorzugten Ausgestaltungen, nach den abhängigen Ansprüchen. Die Erfindung betrifft daneben auch ein mit einer solchen Kabelzugabfangvorrichtung ausgestattetes Spleißmodul für Glasfaserkabel sowie eine Verwendung der Kabelzugabfangvorrichtung.

Die erfindungsgemäße Kabelzugabfangvorrichtung sieht ein Steckelement und eine Aufnahme für das Steckelement vor. Die Aufnahme ist dabei eine in einer Mehrzahl gleicher Aufnahmen, die benachbart zueinander einstückig miteinander ausgebildet sind. Die Aufnahme ist also gewissermaßen ein Platz in einer ganzen Auswahl entsprechender Plätze für das Steckelement oder analoge Steckelemente. Das Steckelement wiederum dient zum Einklemmen des dafür vorgesehenen Kabelteils durch Einbringen des Steckelements in die Aufnahme, also z. B. durch Einstecken in die Aufnahme. Im Unterschied zum beschriebenen Stand der Technik soll also nicht zunächst mit einem von Aufnahmeplätzen separaten "losen" Kabelzugabfangelement bereits eine Klemmung erreicht werden, in dem mindestens zwei Teile in klemmender Weise zusammengebracht oder -geklappt werden, um dann, also nach Klemmung, in einer Aufnahme fixiert zu werden. Stattdessen erfolgt die Klemmung durch das Einbringen des Steckelements (mit dem entsprechenden Kabelteil) in die Aufnahme.

Insoweit kann die Aufnahme gewissermaßen die Funktion eines zweiten (oder weiteren) Teils einer konventionellen Kabelzugabfangvorrichtung übernehmen und, jedenfalls gegenüber allen mehrteiligen Varianten aus dem Stand der Technik ein separates Element eingespart werden. Bei im Stand der Technik ebenfalls bekannten klappbaren Vorrichtungen war zwar bereits durch das Zusammenklappen gegeneinander schwenkbarer Elemente eine Klemmung unter Verwendung eines grundsätzlich dennoch einstückigen Teils möglich, aber die Geometrie dieses Teils dementsprechend deutlich komplexer.

Außerdem können Montagebewegungen vereinheitlicht werden, nämlich das Einbringen in die Aufnahme mit dem Zusammenfügen der das Klemmen bewirkenden oder sichernden Bestandteile, sodass zumindest grundsätzlich eine Option zur deutlichen Vereinfachung des Montagevorgangs besteht. Insbesondere ist es leicht möglich und auch bevorzugt, diese vereinheitlichte Bewegung nach dem richtigen Einlegen des Glasfaserkabels (und Abnehmen des Mantels etc.) in das Steckelement bei Bedarf auch ohne eine zweite Hand für die Kabelzugabfangvorrichtung durchzuführen. Die Aufnahme kann nämlich als einstückig ausgestaltete Mehrzahl Bestandteil einer größeren Vorrichtung, z. B. eines Spleißmoduls in Form einer Dose oder als Teil eines anderen größeren Gebildes sein und damit bereits gehalten sein. Im Stand der Technik waren zwei Hände nötig, um die beiden zusammenzufügenden oder zusammenzuklappenden Elemente einer vorbekannten Kabelzugabfangvorrichtung in den endgültigen Zustand zu bringen. Natürlich kann eine zweite Hand zum Halten der Dose, einer Spleißmodul-Schublade oder -Drehlade oder dergleichen benutzt oder vielleicht auch nötig werden, aber jedenfalls ist die Kabelzugabfangvorrichtung damit nicht nur zusammengebaut, sondern auch montiert.

Dementsprechend richtet sich die Erfindung auf Anwendungen mit einer Mehrzahl benachbarter Aufnahmen, z. B. in einer linearen Reihe. Vorzugsweise sind dabei mindestens 6 benachbarte Aufnahmen vorgesehen, besonders bevorzugterweise mindestens 12 oder sogar mindestens 24. Die Aufnahmen können dabei z. B. als eine Reihe von Öffnungen in einer Wand einer Spleißdose oder an einer geeigneten Position an einem anderen Spleißmodul mit Spleißstellenablagen vorgesehen sein. Insoweit richtet sich die Erfindung auch auf ein entsprechend ausgestaltetes Spleißmodul, also mit zumindest einer erfindungsgemäßen Kabelzugabfangvorrichtung daran. Solche Spleißmodule können, wenn sie keine eigenständigen Dosen sind, auch zu mehreren gestapelt sein und die Erfindung betrifft auch einen solchen Stapel. Sie betrifft schließlich auch einen Verteilerschrank mit entsprechenden Spleißmodulen bzw. Spleißmodulstapeln.

Bei einer bevorzugten Ausgestaltung wird das Steckelement in einer lokalen Leitungsrichtung der Glasfaser in die Aufnahme eingesteckt. Die lokale Leitungsrichtung ist diejenige Richtung, die innerhalb des Steckelements vorherrscht (denn die Glasfaser bzw. das Glasfaserkabel können außerhalb des Steckelements gekrümmt verlaufen). So ist das Ausführungsbeispiel aufgebaut. Generell wäre aber z. B. auch eine Einsteckbewegung rechtwinklig zur lokalen Leitungsrichtung möglich, also z. B. in Bezug auf das Ausführungsbeispiel von oben oder von der Seite in eine entsprechende Aufnahme hinein (statt von vorn).

Es wurde bereits angesprochen, dass in einem Glasfaserkabel regelmäßig Zugentlastungsfasern vorhanden sind und diese dann bevorzugt als der erfindungsgemäß zu verklemmende Kabelteil in Betracht kommen. Dementsprechend ist also der Fall bevorzugt, bei dem durch das Einbringen des Steckelements, z. B. das gerade angesprochene Einstecken in Leitungsrichtung, ein Teil der oder die Zugentlastungsfasern verklemmt werden, und zwar vorzugsweise zwischen dem Steckelement und der Aufnahme.

So kann etwa für mindestens die Glasfaser und die Zugentlastungsfasern (und optional auch den Kabelmantel) ein Aufnahmeschlitz in dem Steckelement vorgesehen sein, der dementsprechend entlang der Leitungsrichtung verläuft. Vorzugsweise endet dieser in dem Steckelement und können dann die Zugentlastungsfasern durch einen eigens hierzu vorgesehenen Kanal seitlich weggeführt werden zu einer Außenseite des Steckelements. Dort können Sie dann verklemmt werden, wobei allerdings auch schon der Zugentlastungsfaser-Kanal zum Verklemmen beitragen könnte. Beim Ausführungsbeispiel gibt es zwei solche Kanäle, und zwar je einen zu einer Seite. Dementsprechend können die Zugentlastungsfasern z. B. auf die beiden Kanäle aufgeteilt werden oder über einen weg und über den anderen wieder zurückgeführt werden, vgl. das Ausführungsbeispiel.

An der oder den Außenseiten können die Fasern dann zurückgeführt werden, und zwar vorzugsweise entgegen ihrer Richtung in dem Aufnahmeschlitz (für zumindest Glasfaser und Zugentlastungsfasern, vergleiche oben). An dieser Stelle können sie besonders einfach und effektiv zwischen der entsprechenden Außenseite des Steckelements und der Aufnahme eingeklemmt werden, und zwar während des Einsteckens. Unter anderem in diesem Sinn ist das Einstecken in der lokalen Leitungsrichtung bevorzugt, weil es dann ungefähr parallel zur Richtung der Zugentlastungsfasern in diesem Bereich erfolgt.

Für dieses Einklemmen kann ein Zwischenraum zwischen der Aufnahme und dem Steckelement vorgesehen sein (vorzugsweise je einer auf zwei entgegengesetzten Seiten des Steckelements), also ein kleiner Zwischenabstand in einem Schnitt senkrecht zur lokalen Leitungsrichtung. Dieser Zwischenraum umfasst dabei vorzugsweise die gesamte verfügbare Höhe des Steckelements. Damit können die Fasern gut verteilt und in diesem Zustand verklemmt werden.

Weiterhin kann es an einem bezüglich der Einsteckrichtung rückseitigen Ende des Steckelements, also an der Seite, die beim Einstecken in Bezug auf die Aufnahme distal ist, einen Führungskanal für die Zugentlastungsfasern geben, vorzugsweise je einen an zwei entgegengesetzten Ecken dieser Rückseite. Ein solcher Führungskanal an einer rückseitigen Ecke erlaubt ein einigermaßen definiertes Herumführen der Zugentlastungsfasern (oder eines Teils davon) um das Steckelement an dieser Stelle, also derjenigen Fasern, die aus dem klemmenden Zwischenraum zur Rückseite austreten. Dann kann ein entsprechender Längenüberschuss der Zugentlastungsfasern durch den Führungskanal geführt und, insbesondere wenn es zwei Führungskanäle gibt, auch auf der Gegenseite wieder in den dortigen Zwischenraum zwischen Steckelement und Aufnahme hineingebracht werden. Statt also die Zugentlastungsfasern auf zwei Gruppen aufzuteilen und jede Gruppe auf einer Seite durch den entsprechenden Zwischenraum zum rückseitigen Ende zu bringen, können die Zugentlastungsfasern also auch (vorzugsweise alle) auf einer Seite zum rückseitigen Ende geführt werden und dann entlang dem oder den Führungskanälen zum Zwischenraum auf der anderen Seite und in diesem wieder zum vorderseitigen Ende gebracht werden. In anderen Worten können die Zugentlastungsfasern um das Steckelement herumgewickelt werden. Dies kann auch über eine vollständige Umrundung hinausgehen, insbesondere noch einmal in einem der Zwischenräume in Richtung Rückseite.

Die eingesteckte Position des Steckelements in der Aufnahme kann durch die Klemmkräfte gesichert sein, es können aber (darüber hinaus) auch weitere Sicherungsmaßnahmen vorgesehen sein, insbesondere eine Rastvorrichtung. Z. B. kann das Steckelement einen Schnapphaken aufweisen, etwa an seiner Unterseite und nach unten weisend. Dieser kann mit einem entsprechenden komplementären Gegenstück, insbesondere einer Außenkante der Aufnahme, zusammenwirken. Bei dieser Außenkante kann es sich gewissermaßen um das Ende der Aufnahme in der Einsteckrichtung (jedenfalls an der betreffenden Seite, insbesondere unten) handeln, vergleiche das Ausführungsbeispiel.

Darüber hinaus kann das Steckelement auch einen Anschlag aufweisen, insbesondere an der Rückseite, also der bezüglich der Einsteckbewegung von der Aufnahme distalen Seite. Dieser Anschlag kann in einem gegenüber der Aufnahme verbreiterten Bereich (senkrecht zur Einsteckrichtung) bestehen. Sowohl das Einschnappen als auch das Erreichen der Aufnahme durch den Anschlag können es dem Benutzer erleichtern, ein ausreichend tiefes Einstecken zu verifizieren. Außerdem kann natürlich durch die Verrastung ein unbeabsichtigtes Lockern vermieden werden, weil die Rastvorrichtung zunächst (z. B. mit einem Finger von unten kommend) gelöst werden muss. Der Anschlag wiederum kann beim Herausziehen des Steckelements helfen, beispielsweise als Greifkante für Finger oder Fingernägel.

Die Aufnahme kann ganz einfach ausgestaltet sein, insbesondere als im Querschnittsprofil (senkrecht zur Einsteckrichtung) viereckiger Kanal, der vorderseitig und rückseitig offen ist. Damit können etwas komplexere geometrische Ausgestaltungen zugunsten der Klemmwirkung und anderer Funktionen auf das Steckelement begrenzt werden, vergleiche das Ausführungsbeispiel. Dort ist das Profil zugunsten einer Sicherung gegen verdrehtes Einstecken trapezförmig, wobei eine solche Sicherung auch durch andere Symmetriebeschränkungen möglich ist.

Ferner kann das Steckelement mit einer Knickschutztülle aus einem nachgiebigen Material an seiner Rückseite versehen sein, sodass das Kabel im fixierten Zustand des Steckelements nicht nur hinsichtlich Zug, sondern auch hinsichtlich Knickbewegungen geschützt ist. Dementsprechend könnte das Steckelement an seiner Rückseite einen festen Vorsprung haben, auf den eine solche Tülle aufgesteckt werden kann und der eine Öffnung für das Kabel zum Einführen aufweist. Allerdings kann auch ein anderweitiger Knickschutz an z. B. dem Spleißmodul vorgesehen sein, vergleiche das Ausführungsbeispiel.

Schließlich ist darauf hinzuweisen, dass sich die Erfindung auch auf ein Verfahren zum Befestigen eines Glasfaserkabels und auf eine entsprechende Verwendung einer Kabelzugabfangvorrichtung bezieht. Die Offenbarung ist auch im Hinblick auf das Verfahren und die Verwendung zu verstehen.

Das gilt im Besonderen für das folgende Ausführungsbeispiel, dessen einzelne Merkmale im Rahmen der Ansprüche auch in anderen Kombinationen wesentlich sein können.

Im Einzelnen zeigt
- Figur 1: eine perspektivische Darstellung eines vereinfachten erfindungsgemäßen Spleißmoduls,
- Figur 2: einen Ausschnitt A aus Figur 1 vergrößert,
- Figur 3: eine teils geschnittene Ausschnittsdarstellung,
- Figur 4: ein Steckelement aus Figur 3 in verschiedenen Perspektiven und
- Figur 5: das Steckelement mit einem Glasfaserkabel.

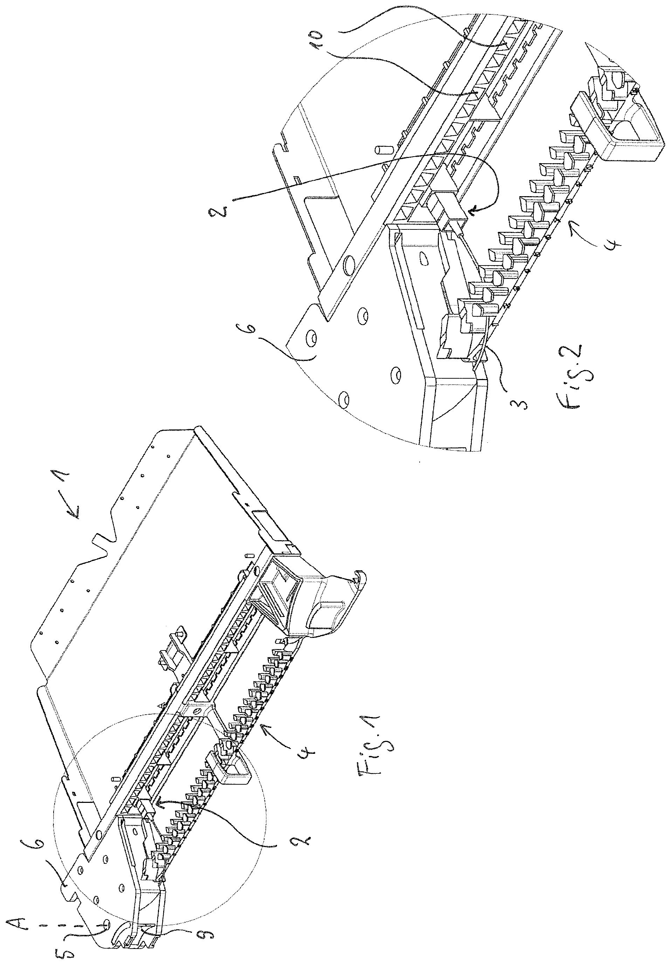

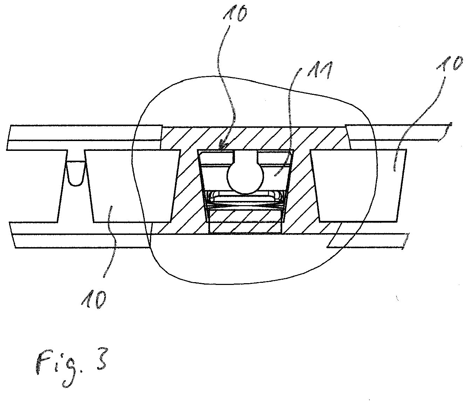

Zunächst wird zum Verständnis des Gesamtzusammenhangs auf die beiden bereits zitierten Dokumente EP 2 221 650 A1 und EP 3 511 753 A1 oder auch die EP 3 528 023 A1 verwiesen. Insbesondere zeigen die Figuren 1 und 3 in der erstgenannten einen einschlägigen Verteilerschrank mit einer Mehrzahl Spleißmodulstapel und zeigt die Figur 2 dort einen solchen Spleißmodulstapel mit rechts vorne liegender Schwenkachse A. In dem zweitgenannten Zitat sieht man den Verteilerschrank in Figur 8 und einen Spleißmodulstapel mit ebenfalls rechts vorne liegender Schwenkachse A in Figur 7. Figur 6 dort zeigt ein einzelnes schwenkbares Spleißmodul aus dem Stapel mit vorne liegenden steckbaren Patchstellen und dahinter zwei vertikalen Stapeln aus einer Vielzahl Spleißkassetten, die jeweils eine Mehrzahl Spleißstellenablagen enthalten.

Figur 1 der vorliegenden Anmeldung entspricht weitgehend dieser zuletzt beschriebenen Figur 6, wobei allerdings die Schwenkachse A diesmal links vorne liegt. Das dargestellte Spleißmodul 1 ist zur Vereinfachung ohne Spleißstellenablagen, d. h. ohne die einschlägigen Spleißkassetten gezeigt, die man sich aber analog zu der Figur 6 in der EP 3 511 753 A1 hinzudenken kann.

Im Übrigen zeigt Figur 1 (und natürlich auch die Vergrößerung in Figur 2) eine steckbare Patchstelle 2, wobei die Figuren bereits veranschaulichen, dass tatsächlich (statt der einen dargestellten Patchstelle 2) 24 (nämlich 4 × 6) davon nebeneinander vorgesehen werden können. Man erkennt ferner, dass ein aus einer solchen steckbaren Patchstelle 2 herausführendes einzelnes Glasfaserkabel 3 durch eine den Patchstellen 2 vorgelagerte Reihe 4 von Biegeschutzelementen hindurchgeführt ist und davor dann nach links in Richtung zur Schwenkachse A weiterläuft. Zur Verdeutlichung der Struktur des Spleißmoduls 1 ist das Glasfaserkabel 3 in der Darstellung hier allerdings abgeschnitten.

Weiterhin zeigt das Spleißmodul 1 aus den Figuren 1 und 2 über der eingezeichneten Patchstelle 2 eine Reihe untereinander gleicher Öffnungen, und zwar in einer 1:1-Zuordnung zu den Patchstellen 2. Diese Öffnungen tragen die Ziffer 10. Hierzu kann zum technischen Hintergrund zunächst verwiesen werden auf die EP 3 528 023 A1 der selben Anmelderin, vergleiche dort die Öffnungen 19 und die zugehörigen Steckelemente 14 in den Figuren 7 ff. Es geht hierbei um alternative Öffnungen für Patchstellen 2, und zwar für nicht aufzutrennende, also durchgehende Glasfaserkabel.

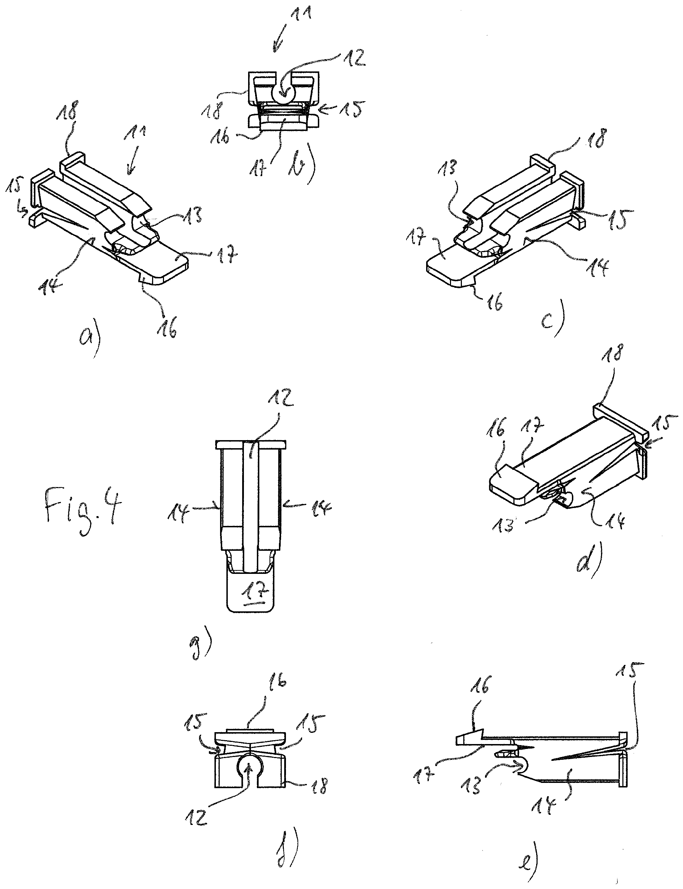

Eine Frontansicht (in lokaler Leitungsrichtung) auf eine solche Öffnung 10 zeigt Figur 3, wobei die eingekreiste Öffnung 10 dabei zusätzlich ein eingestecktes Steckelement 11 darstellt und im Übrigen teilweise geschnitten ist. Die Schnittebene liegt dabei in Bezug auf Figur 4 g im unteren Bereich, also dort, wo nur noch der Vorsprung 17 mit der unterseitigen Rastnase 16 existiert, sodass die übrigen Teile in Figur 3 in Frontansicht dargestellt sind, vergleiche Figur 4 b. Die Figuren 4 a bis g zeigen das Steckelement 11 in unterschiedlicher Blickrichtung, und zwar perspektivisch in den Teildarstellungen a, c, d und in jeweils rechtwinkliger Ansicht im Übrigen.

Im Vergleich zu dem gerade zitierten Dokument EP 3 528 023 A1 tritt das in der vorliegenden Anmeldung dargestellte Steckelement an die Stelle des damaligen (Bezugszeichen 14 in Figur 7); ferner ist das Querschnittsprofil der Öffnungen 10 senkrecht zur lokalen Leitungsrichtung, also gemäß Figur 3, etwas verändert, nämlich nunmehr trapezförmig. Im Übrigen geht es, wie schon in der zitierten Schrift, um die Festlegung eines an sich ununterbrochenen Glasfaserkabels in der entsprechenden Öffnung 10 in Verbindung mit einer Zugabfangfunktion.

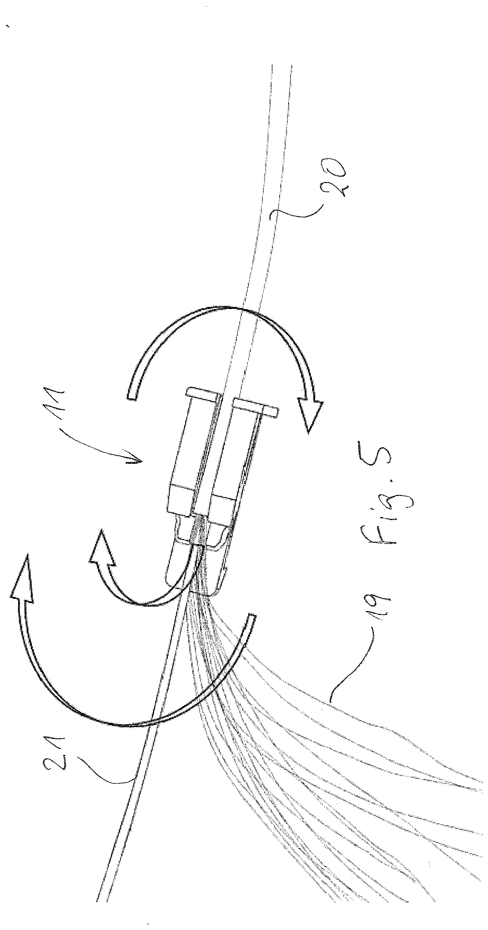

Das entsprechende Steckelement 11 ist ein einstückiges Spritzgussteil und weist für die beschriebene Funktion zunächst einen entlang seiner Längsrichtung und der lokalen Leitungsrichtung verlaufenden und von oben zugänglichen Aufnahmeschlitz 12 auf. Dieser hat, wie vor allem die Figuren 4 b und, umgekehrt, 4 f zeigen, eine kreisförmige Profilform, die durch einen demgegenüber etwas verengten Durchtritt nach oben zugänglich ist. Durch den Durchtritt kann ein Glasfaserkabel mit seinem äußeren Mantel 20 (Figur 5) vor Einstecken des Steckelements 11 in eine Öffnung 10 eingedrückt werden, wobei die Seitenwände des Steckelements 11 geringfügig elastisch nachgeben. Damit ist das Kabel gewissermaßen eingeklipst. Zuvor kann sein äußerer Mantel 20 entfernt (abgesetzt) werden, und zwar so, dass dieser im eingeklipsten Zustand innerhalb oder am Ende des Aufnahmeschlitzes 12 endet. Figur 5 zeigt diesen Zustand und im linken Bereich die Kabelbestandteile 19 und 21 ohne den Mantel 20.

Ferner kann das innerhalb dieses äußeren Mantels üblicherweise vorhandene Bündel Zugentlastungsfasern 19 aus z. B. Aramid zusammengefasst und vielleicht etwas verdreht werden. Es schaut dann nach vorn, d. h. in Figur 4 a nach vorn rechts und in Figur 5 nach links, aus dem Aufnahmeschlitz 12 heraus und kann wahlweise durch einen der beiden im Profil halbkreisförmigen Zugentlastungsfaser-Kanäle 13 rechtwinklig zur Richtung des Aufnahmeschlitzes 12 weggeführt werden. Grundsätzlich könnte man dabei ungefähr die Hälfte des Faserbündels 19 zur einen und die andere Hälfte zur anderen Seite führen, wobei vorzugsweise das gesamte Bündel 19 zu einer Seite gebracht wird. Dann kann das entsprechende Faserbündel 19 entlang einer der beiden Außenseiten 14, also zum Beispiel der in Figur 4 e in seitlicher Ansicht sichtbaren Seite, zu der in Figur 4 f sichtbaren Rückseite geführt werden.

Dort gibt es zwei mittig ineinander übergehende Führungskanäle 15, die sich gemäß den Figuren 4 a, c, d und e in die Seitenflächen 14 fortsetzen und dort auslaufen. Dabei sind sie auf die bereits angeführten Kanäle 13 zu gerichtet. Dementsprechend kann das Aramidfaserbündel 19 in diesen Kanälen 15 um die Rückseite herum und auf der anderen Außenseite 14 des Steckelements 11 wieder nach vorn geführt werden, wo es durch den verbleibenden Kanal 13 erneut um 90° nach innen geführt werden kann. Damit ist gewissermaßen eine vollständige Umkreisung des Steckelements 11 vollzogen, wie die Pfeile in Figur 5 verdeutlichen.

Zum Beispiel in diesem Zustand kann dann das Faserbündel 19 eingekürzt werden, bspw. auf eine verbleibende Überstandslänge, die etwas weniger als die Länge einer Außenseitenfläche 14 in der Leitungsrichtung beträgt. Wenn dann das Steckelement mit dem herumgewickelten Faserbündel in eine der Öffnungen 10 eingeschoben wird, und zwar infolge der Trapezgestalt dieser Öffnung 10 und der passenden Form des größten Teils des Steckelements 11 (vergleiche Figur 4 b) orientierungsrichtig, also mit nach oben offenem Aufnahmeschlitz 12, dann wird das Faserbündel 19 insbesondere zwischen den Außenseitenflächen 14 des Steckelements 11 und den korrespondierenden Innenwänden der Öffnung 10 verklemmt. Dazu weisen diese Flächen einen entsprechenden Zwischenabstand voneinander auf, der in Figur 3 angedeutet ist. Hinzu kommt eine gewisse elastische Nachgiebigkeit der beteiligten Materialien.

Insgesamt ist damit das Faserbündel 19 durch seine Wicklung um das Steckelement 11 herum und damit die mehrfachen Biegungen an den Ecken und durch die Klemmung stabil gehalten, wobei die Klemmung erst durch das Einstecken des Steckelements 11 in die Öffnung 10 entsteht. Bei konventionellen Vorrichtungen dieses Typs, insbesondere gemäß der bereits zitierten EP 3 528 023 A1 oder der EP 3 255 472 A1, müssen für diese Klemmung zunächst zwei Elemente relativ zueinander bewegt und insbesondere zusammengesteckt werden, wobei diese Elemente in der Regel auch voneinander getrennt realisiert sind. Die dann entstandene und bereits die Klemmung bewirkende Einheit wird in eine Aufnahme eingebracht. Im vorliegenden Fall geschieht dies in einem Vorgang und kann hinsichtlich des Steckelements 11 ein einziges einstückiges Teil verwendet werden.

Bei diesem Einstecken kann der gerade beschriebene Überstand ein weiteres Mal entlang der schon am Anfang des Herumwickelns von dem Faserbündel erfassten Seitenfläche 14 verklemmt werden, sodass das Bündel hier gewissermaßen doppelt vorliegt. Natürlich könnte das Faserbündel aber auch knapper abgeschnitten werden.

Die eingesteckte Position des Steckelements 11 ist gesichert durch den bereits erwähnten Schnapphaken 16 an der Unterseite des zungenartigen Vorsprungs 17. Dieser greift über eine in den Figuren 1 und 2 nach hinten rechts weisende rückseitige Abschlusskante der Öffnung 10, also gewissermaßen hinter das im Sinn dieser Figuren hintere Ende der unteren Fläche der Öffnungen 10. Gleichzeitig liegt eine in den Figuren 4 gut sichtbare Anschlagplatte 18 an der entgegengesetzten Seite der Öffnung 10 an. Zum Wiederherausnehmen des Steckelements 11 muss mit einem Finger der Vorsprung 17 etwas nach oben gebogen werden, um den Schnapphaken 16 zu lösen und z. B. mit den Fingernägeln der anderen Hand die Anschlagplatte 18 gegriffen und zurückgeschoben werden.

Nach Wegnahme des äußeren Mantels 20 und der Zugentlastungsfasern 19 verbleibt eine innere Hülle 21 um die Glasfaser herum, der nach einigen Zentimetern und Abfangen des Kabels unter sog. Niederhaltern ebenfalls abgetrennt wird (nicht gezeigt). Von dort läuft die eigentliche Glasfaser nur noch mit einem sogenannten Coating geschützt bis zur Spleißstelle.

Grundsätzlich ist der technische Sinn der unterbrechungsfreien Verlegeoptionen für die Glasfaserkabel in der bereits zitierten EP 3 528 023 A1 vollständig beschrieben. Wenn z. B. eine zunächst über eine Patchstelle, also mit Unterbrechung und Steckverbindung, geführte Verbindung unterbrechungsfrei werden soll, dann wird die entsprechende Pigtailfaser in der Spleißkassette mit den Spleißstellenablagen mit der verspleißten Faser gebrochen und verbleibt in der Ablage der Kassette. Das unterbrechungsfreie neue "Schaltkabel" wird durch die Öffnung 10 bis in die Kassette geführt, und zwar mit einer ausreichenden Faserüberlänge, dort gespleißt und der Spleiß wird in der Kassette abgelegt. Die Verlegung der Glasfaser zwischen der für diese Anmeldung relevanten Klemmstelle und der Spleißstelle ist hier nicht wesentlich; es werden dabei an verschiedenen Stellen Niederhalter z. B. mit Moosgummibelag benutzt, um die Glasfasern geordnet und geschützt zu führen. Im Übrigen wird die hier beschriebene Zugentlastungs- und Klemmstelle durch Zusammenfügung des Steckelements 11 und des die Öffnung 10 tragenden Teils hergestellt.

## Patentansprüche

1. Kabelzugabfangvorrichtung (10, 11) für Glasfaserkabel mit einer Aufnahme (10) und
einem Steckelement (11) zum Einklemmen eines von der Glasfaser verschiedenen Kabelteils (19) des Glasfaserkabels durch Einbringen des Steckelements (11) in die Aufnahme (10),
wobei die Aufnahme (10) eine in einer Mehrzahl gleicher Aufnahmen (10) ist, welche Aufnahmen (10) benachbart zueinander einstückig miteinander ausgebildet sind,
wobei die Kabelzugabfangvorrichtung (10, 11) ausgelegt ist für Glasfaserkabel mit in dem Kabel vorhandenen Zugentlastungsfasern (19) und dazu, dass Zugentlastungsfasern als der verschiedene Kabelteil (19) bei dem Einbringen des Steckelements (11) in die Aufnahme (10) in der Kabelzugabfangvorrichtung (10, 11) verklemmt werden,
und wobei die Aufnahme (10) und das Steckelement (11) so ausgelegt sind, dass Zugentlastungsfasern (19) dazwischen entgegen der Leitungsrichtung zurückgeführt werden und eingeklemmt werden können,
und mit einem Führungskanal (15) für Zugentlastungsfasern (19) an einer in Bezug auf die Einsteckrichtung rückseitigen Ecke des Steckelements (11), sodass Zugentlastungsfasern (19) um das Steckelement (11) herum gewickelt werden können.

2. Kabelzugabfangvorrichtung (10, 11) nach einem der vorstehenden Ansprüche, bei der das Steckelement (11) einstückig ist.

3. Kabelzugabfangvorrichtung (10, 11) nach einem der vorstehenden Ansprüche, bei der das Steckelement (11) und die Aufnahme (10) zu einem Einstecken in der lokalen Leitungsrichtung der Glasfaser ausgelegt sind.

4. Kabelzugabfangvorrichtung (10, 11) nach einem der vorstehenden Ansprüche mit einem Aufnahmeschlitz (12) für die Glasfaser und die Zugentlastungsfasern entlang der Leitungsrichtung und mit einem Zugentlastungsfaser-Kanal (13), der an den Aufnahmeschlitz (12) anschließt und dazu ausgelegt ist, Zugentlastungsfasern (19) ohne die Glasfaser von dem Aufnahmeschlitz (12) seitlich weg zu einer Seite des Steckelements (11) zu führen, wobei vorzugsweise beidseits des Aufnahmeschlitzes (12) je ein Zugentlastungsfaser-Kanal (13) dieser Art zum Führen der Zugentlastungsfasern vorgesehen ist.

5. Kabelzugabfangvorrichtung (10, 11) einem der vorstehenden Ansprüche, bei der zu dem genannten Zweck ein Zwischenraum zwischen der Aufnahme (10) und dem Steckelement (11) an einer Seite des Steckelements (11) vorgesehen ist, der in einer zu der Leitungsrichtung senkrechten Richtung die Gesamterstreckung des Steckelements (11) an dieser Seite ausmacht.

6. Kabelzugabfangvorrichtung (10, 11) nach einem der vorstehenden Ansprüche, bei der je ein solcher Führungskanal (15) an zwei entgegengesetzten rückseitigen Ecken des Steckelements (11) vorgesehen ist.

7. Kabelzugabfangvorrichtung (10, 11) nach einem der vorstehenden Ansprüche, bei der das Steckelement (11) eine Rastvorrichtung, vorzugsweise einen Schnapphaken (16), zum Verrasten des Steckelements (11) in der Aufnahme (10) aufweist, wobei vorzugsweise der Schnapphaken (16) an einer Außenkante der Aufnahme (10) verrasten kann.

8. Kabelzugabfangvorrichtung (10, 11) nach einem der vorstehenden Ansprüche, bei der das Steckelement (11) einen eine Einbringbewegung beim Einbringen in die Aufnahme (10) begrenzenden Anschlag (18) aufweist.

9. Kabelzugabfangvorrichtung (10, 11) nach einem der vorstehenden Ansprüche, bei der die Aufnahme (10) ein einfaches viereckiges inneres Querschnittsprofil aufweist.

10. Kabelzugabfangvorrichtung (10, 11) nach einem der vorstehenden Ansprüche, bei der das Steckelement (11) nur in einer Drehorientierung relativ zur lokalen Leitungsrichtung in die Aufnahme (10) eingebracht werden kann.

11. Spleißmodul (1) mit einer Kabelzugabfangvorrichtung (10, 11) nach einem der vorstehenden Ansprüche, bei dem die Mehrzahl Aufnahmen (10) in einer Reihe an dem Spleißmodul (1) ausgebildet sind und eine Spleißstellenablage für die Glasfaser vorgesehen ist.

12. Verwendung einer Kabelzugabfangvorrichtung (10, 11) nach einem der vorstehenden Ansprüche zum Befestigen eines Glasfaserkabels durch Einbringen des Steckelements (11) in die Aufnahme (10) und Einklemmen der Zugentlastungsfaser (19) bei diesem Einbringen, und zwar durch Herumwickeln der Zugentlastungsfaser (19) um das Steckelement (11).
